# EUROPEAN PATENT SPECIFICATION

(11) **EP 2 999 146 B1**
(45) Date of publication and mention of the grant of the patent: **08.08.2018**
(21) Application number: 14184895.2
(22) Date of filing: 16.09.2014
(51) Int. Cl.: H04B 10/58, H04B 10/69

(54) **Method for improving signal quality of a digital signal being processed in a linear device and apparatus using the same**
Verfahren zur Verbesserung der Signalqualität eines in einer linearen Vorrichtung verarbeiteten digitalen Signals sowie Vorrichtung damit
Procédé pour améliorer la qualité d'un signal numérique traité à travers un dispositif linéaire et appareil l'utilisant

(43) Date of publication of application: 23.03.2016
(73) Proprietor: Cosemi Technologies Inc., Irvine, California 92614 (US)
(72) Inventor: Chacinski, Marek Grzegorz, 12358 Farsta (SE); Chitica, Nicolae Pantazi, 16471 Kista (SE); Kaikkonen, Andrei, 17548 Jaerfaella (SE)
(74) Representative: Grünecker Patent- und Rechtsanwälte PartG mbB

(56) References cited:
- US-A1- 2013 142 520
- Harry Fu: "Equalization for High-Speed Serial Interfaces in Xilinx 7 Series FPGA Transceivers", , 27 March 2012 (2012-03-27), XP055171475, Retrieved from the Internet: URL:http://www.xilinx.com/support/document ation/white_papers/wp419-7Series-XCVR-Equa lization.pdf [retrieved on 2015-02-23]
- RYLYAKOV A V ET AL: "Transmitter Predistortion for Simultaneous Improvements in Bit Rate, Sensitivity, Jitter, and Power Efficiency in 20 Gb/s CMOS-Driven VCSEL Links", JOURNAL OF LIGHTWAVE TECHNOLOGY, IEEE SERVICE CENTER, NEW YORK, NY, US, vol. 30, no. 4, 1 February 2012 (2012-02-01), pages 399-405, XP011423837, ISSN: 0733-8724, DOI: 10.1109/JLT.2011.2171917

## Description

The present invention relates to a method for improving quality of a digital signal being processed at high speed in a linear device. The present invention also relates to an apparatus using this method.

Due to the high data rates in recently developed communication systems having data transmission rates of, for instance, 25 Gbps, signal integrity has become a major concern.

One cause of signal quality degradation in linear devices is bandwidth limitation. This is due to the physical properties of the components in the communication system. In order to compensate for bandwidth limitation, post-transition pre-emphasis signal processing is usually applied to signals transmitted/received in a conventional communication system.

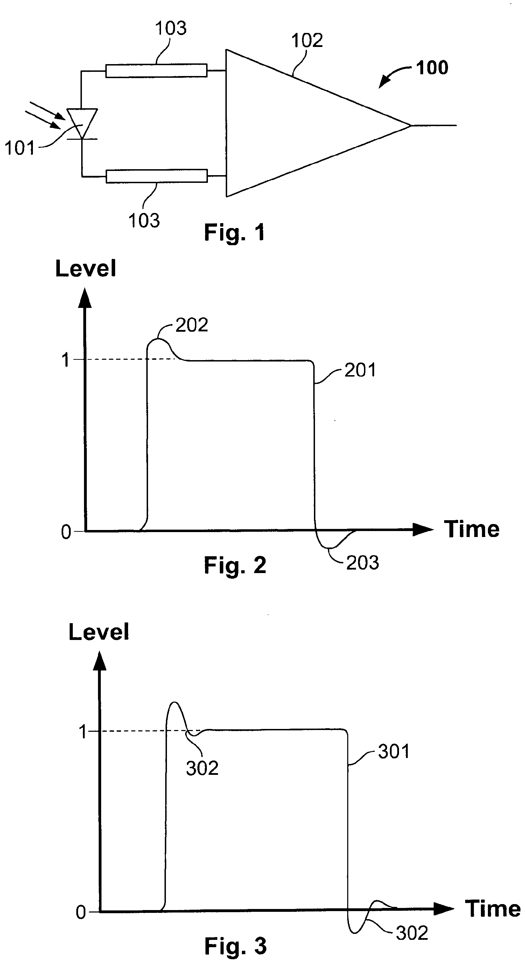

Figure 1 shows the schematic of an optical receiver 100 used in an optical link of a conventional communication system. The optical receiver 100 comprises a photodiode 101 (this is, for instance, a positive intrinsic negative diode, abbreviated as PIN), and a transimpedance amplifier 102 (abbreviated as TIA) connected to the photodiode 101 by means of interconnects 103. Transimpedance amplifier 102 is an example of a linear device. The photodiode 101 converts the (digital) optical signal received from an optical fiber (not shown in Figure 1) into an electric digital signal, and outputs the digital electric signal to the interconnects 103. The transimpedance amplifier 102 is adapted to receive, at its inputs, the digital electric signal provided by the interconnects 103, to apply optionally post-transition pre-emphasis signal processing to the received digital electric signal so as to compensate for bandwidth limitation, to amplify the pre-emphasized digital signal, and to output the amplified digital signal to other devices for further processing.

The effect of post-transition pre-emphasis signal processing on a rectangular pulse signal, transitioning between "0"-level and "1"-level, is shown in Figure 2. The pre-emphasized rectangular pulse 201 of Figure 2 exhibits an overshoot 202 immediately after the transition from the "0"-level to the "1"-level and an undershoot 203 immediately after the transition from the "1"-level to the "0"-level. In particular, the post-transition pre-emphasis signal processing performed by the transimpedance amplifier 102 includes performing a transition from "0"-level to "1"-level, applying an overshoot to the "1"-level, relaxing to the "1"-level, performing a transition from "1"-level to "0"-level, applying an undershoot to the "0"-level, and then relaxing to the "0"-level.

Figure 3 shows the response 301 of the transimpedance amplifier 102 on a rectangular pulse signal applied at its inputs. The response 301 shows an enhanced ringing 302 at the transition from the "0"-level to the "1"-level and at the transition from the "1"-level to the "0"-level. The ringing 302 is enhanced in the optical receiver 100 due to post-transition pre-emphasis signal processing of the digital/rectangular pulses.

Ringing causes degradation of the signal quality. It is an unwanted oscillation in the step response of a linear system, particularly of systems having a resonance frequency, or systems described by a Laplace-filter having more than one pole. Ringing is not desired, because it enhances the jitter in the digital signal.

US 2013/0142520 A1 discloses a high speed optical transmitter system, comprising: a laser to output a signal over a fiber link; an anti-causal filter to receive a data signal S(t), wherein the anti-causal filter processes the first signal S(t) to create a second signal αS(t+T) being the inverse of the first signal, where α modifies the amplitude of the second signal and T modifies a delay of the second signal; and a combiner to combine the first signal and the second signal to output an anti-causal pre-emphasis signal to be input to the laser.

Harry Fu: "Equalization for High-Speed Serial Interfaces in Xilinx 7 Series FPGA Transceivers", 27 March 2012, XP055171475, describes techniques to combat insertion loss and discontinuities. As an example of a transmitter end technique, this article shows a TX driver block diagram with three-tap TX de-emphasis. The three taps include the pre-tap, main-tap, and post-tap. The impact of the post-tap de-emphasis on the signal is that the symbol that has the high swing is the one after the transition. The pre-tap de-emphasis is similar to post-tap. The difference is that the symbol that has the high swing is the one before the transition rather than after the transition.

Rylyakov A V et al.: "Transmitter Predistortion for Simultaneous Improvements in Bit Rate, Sensitivity, Jitter, and Power Efficiency in 20 Gb/s CMOS-driven VCSEL links", Journal of Lightwave Technology, IEEE Service Center, New York, NY, US, vol. 30, no. 4, 1 February 2012, pages 399 - 405, XP011423837, ISSN: 0733-8724, DOI, shows a block diagram of a full optical link incorporating a RX1 receiver. The optical link includes a VCSEL, a multimode fiber (MMF), a photo diode (PD), and the RX front end.

### SUMMARY OF INVENTION

It is therefore an object of the present invention to provide a method for improving signal quality / integrity of a digital signal in a linear device, particularly by compensating for bandwidth limitation without enhancing ringing. It is also an object of the present invention to provide an apparatus that is adapted to use this method.

This objective is achieved by the features as set forth in the independent claims. Further embodiments of the present invention are set forth in the dependent claims.

The present invention is based on the idea that the negative effects of bandwidth limitation and ringing on a digital (binary) signal, propagating through a linear system/device, can be effectively reduced by pre-transition pre-emphasis of the digital signal. Pre-transition pre-emphasis of a digital signal making a transition from a first level to a second level involves applying an undershoot to the first level before the transition, when the first level is lower than the second level, and/or applying an overshoot to the first level before the transition, when the first level is higher than the second level.

### BRIEF DESCRIPTION OF DRAWINGS

Fig. 1 shows a schematic of an optical receiver for converting an optical signal into an electrical digital signal, used in an optical link of a conventional communication system;
Fig. 2 illustrates the effect of post-transition pre-emphasis signal processing on a rectangular pulse signal;
Fig. 3 illustrates the response of the transimpedance amplifier shown in Figure 1 on a rectangular pulse signal applied at its inputs;
Fig. 4 shows a schematic of an apparatus for processing a digital signal in accordance with a first embodiment of the present invention;
Fig. 5a shows the shape of a positive binary pulse input to the pre-emphasis driver of the apparatus for processing a digital signal according to the first embodiment of the present invention and the shape of the pulse output by the same in response to the positive binary input pulse;
Fig. 5b shows the shape of a negative binary pulse input to the pre-emphasis driver of the apparatus for processing a digital signal according to the first embodiment of the present invention and the shape of the pulse output by the same in response to the negative binary input pulse;
Fig. 6 shows a schematic of an optical receiver in accordance with a second embodiment of the present invention;
Fig. 7 shows a schematic of a communication system in accordance with a third embodiment of the present invention.

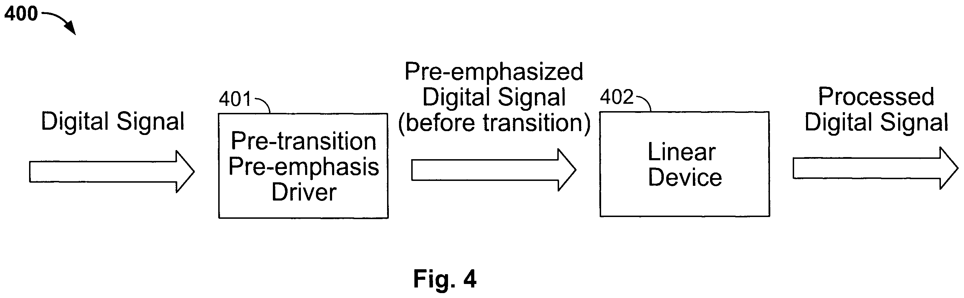

Referring now to Figure 4, an apparatus for processing a digital signal according to the first embodiment of the present invention is shown. The apparatus for processing a digital signal 400 according to the first embodiment of the present invention comprises a pre-emphasis driver 401 and a linear device 402. The pre-emphasis driver 401 is adapted to receive at its input an electrical digital signal including at least one (binary) pulse, to pre-emphasize / peak the received electrical digital signal, and to output a pre-emphasized electrical digital signal. The linear device 402 is adapted to receive at its input an electrical digital signal pre-emphasized by the pre-emphasis driver 401, to process the received signal, and to output the processed digital signal to other devices for further processing (not shown in Figure 4). The linear device 402 can be a device/system having a resonance frequency, or a device/system described by a Laplace-filter having more than one pole.

The pre-emphasis driver 401 of the apparatus for processing a digital signal according to the first embodiment of the present invention is adapted to emphasis/peak a (binary) signal level of a digital signal immediately before the transition from one binary signal level to the other binary signal level. In particular, the pre-emphasis driver 401 is adapted to pre-emphasize the digital signal by applying an undershoot to the first level immediately before the transition, when the first level is lower than the second level (i.e. at a positive transition), and to pre-emphasize the digital signal by applying an overshoot to the first level immediately before the first transition, when the first level is higher than the second level (i.e. at a negative transition). Therefore, pre-emphasis driver 401 is denoted in the following as pre-transition pre-emphasis driver 401.

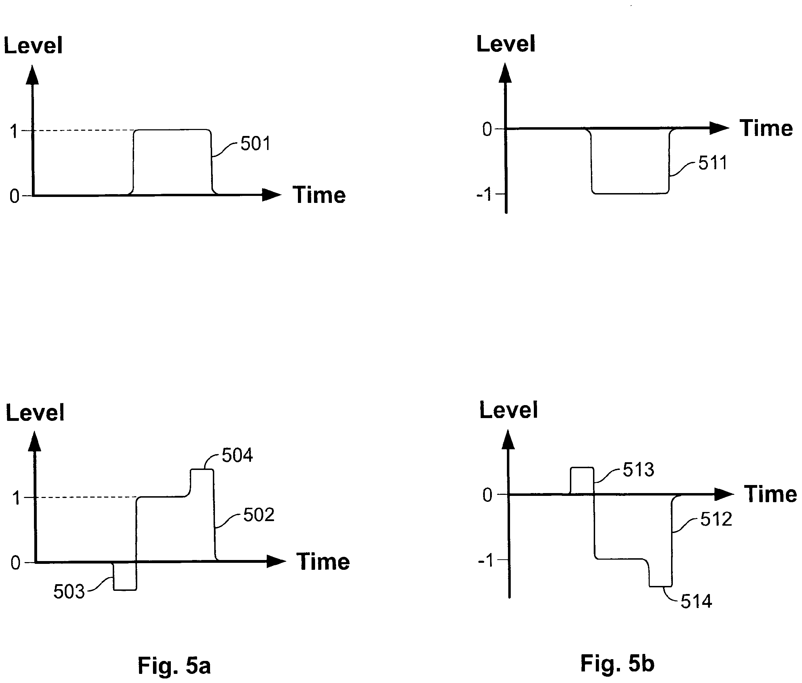

Referring now to Figures 5a and 5b, the effect of the pre-transition pre-emphasis driver 401 on the received electrical digital signal is explained:
The curve 501 in Figure 5a represents the shape of a positive pulse of a digital (binary) signal input to the pre-transition pre-emphasis driver 401. This pulse makes a first, positive transition from a lower level ("0"-level) to an upper level ("1"-level), remains approximately constant at the upper level for the duration of the pulse, and thereafter makes a second, negative transition from the upper level to the lower level. The curve 502 represents the shape of the signal output by the pre-transition pre-emphasis circuit 401 in response to the pulse 501. This curve exhibits an undershoot immediately before (or next to) the positive transition from the lower level to the upper level and an overshoot immediately before (or next to) the negative transition from the upper level to the lower level. Particularly, the curve 502 undershoots the lower level by the undershoot 503, makes a first transition from the lower level to the upper level, stays approximately constant at the upper level, overshoots the upper level by the overshoot 504, makes a second transition from the upper level to the lower level, and then stays approximately constant to the lower level.

The curve 511 in Figure 5b represents the shape of a negative pulse of a digital (binary) signal input to the pre-transition pre-emphasis driver 401. This pulse starts at an upper level ("0"-level), makes a first, negative transition from the upper level to a lower level ("-1"-level), remains approximately constant at the lower level during the pulse length, and thereafter makes a second, positive transition from the lower level to the upper level. Curve 512 in Figure 5b represents the shape of the signal output by the pre-transition pre-emphasis driver 401 in response to the pulse 511. This curve exhibits an overshoot immediately before (or next to) the negative transition from the upper level to the lower level and an undershoot immediately before (or next to) the positive transition from the lower level to the upper level. Particularly, the curve 512 overshoots the upper level ("0"-level) by the overshoot 513, makes a first transition from the upper level to the lower level ("-1"-level), stays approximately constant at the lower level, undershoots the lower level ("-1"-level) by the undershoot 514, makes a second transition from the lower level to the upper level, and then stays approximately constant at the upper level.

For achieving the effects shown in Figures 5a and 5b, the pre-transition pre-emphasis driver 401, for instance, is adapted to split the received digital electric signal into a main path signal and a pre-emphasis path signal, to delay the main path signal about the length of a quarter of a pulse length, to invert and attenuate the pre-emphasis path signal, and to sum up the delayed main path signal and the attenuated inverted pre-emphasis path signal.

In Figure 5a, which shows the output signal of the pre-emphasis driver 401 in response to the input pulse 501, the undershoot applied to the "0"-level is immediately before (or next to) the positive transition of the pulse 502, and the overshoot applied to the "1"-level is immediately before the negative transition of the pulse 502. However, the present invention is not limited to this case, but also covers the following: i) only an undershoot is applied to the "0"-level immediately before the positive transition of pulse 502, but no overshoot is applied to the "1"-level immediately before the negative transition of pulse 502; and ii) only an overshoot is applied to the "1"-level immediately before the negative transition of pulse 502, but no undershoot is applied to the "0"-level immediately before the positive transition of pulse 502.

Furthermore, it is not mandatory for the present invention that the undershoot applied to the lower level is immediately before the positive transition of pulse 502 and that the overshoot applied to the upper level is immediately before the negative transition of pulse 502. It is rather important that the undershoot applied to the lower level of pulse 502 is closer to the positive transition of pulse 502 than to the negative transition of a pulse preceding pulse 502, and that the overshoot applied to the upper level of pulse 502 is closer to the negative transition of pulse 502 than to the positive transition of pulse 502.

In Figure 5b, which shows the output signal of the pre-emphasis driver 401 in response to the input pulse 511, the overshoot applied to the "0"-level is immediately before (or next to) the negative transition of pulse 512, and the undershoot applied to the "-1"-level is immediately before (or next to) the positive transition of pulse 512. However, the present invention is not limited to this case, but also covers the following: i) only an overshoot is applied to the "0"-level immediately before the negative transition of pulse 512, but no undershoot is applied to the "-1"-level immediately before the positive transition of pulse 512; and ii) only an undershoot is applied to the "-1"-level immediately before the positive transition of pulse 512, but no overshoot is applied to the "0"-level immediately before the negative transition of pulse 512.

Furthermore, it is not mandatory for the present invention that the overshoot applied to the upper level is immediately before the negative transition of pulse 512 and that the undershoot applied to the lower level is immediately before the positive transition of pulse 512. It is rather important that the overshoot applied to the upper level of pulse 512 is closer to the negative transition of pulse 512 than to the positive transition of a pulse preceding pulse 512, and that the undershoot applied to the lower level of pulse 512 is closer to the positive transition of pulse 512 than to the negative transition of pulse 512.

In Figure 5a and 5b only pulses making a transition from a first level to a second level and vice versa are shown. However, the present invention is not limited to a binary (two-level) digital signal, but is also applicable to a multi-level digital signal having more than two levels, making transitions between any two levels of the multi-level digital signal, and making an arbitrary number of (positive and/or negative) transitions between two levels of the multi-level digital signal.

In the apparatus for processing a digital signal according to the first embodiment of the present invention, the input of the linear device 402 is connected (directly) to the output of the pre-transition pre-emphasis driver 401, so that the linear device 402 receives at its input the pre-emphasized electrical digital signal output by the pre-transition pre-emphasis driver 401. However, the apparatus for processing a digital signal according to the present invention can have one or more digital signal processing units interposed between the output of the pre-transition pre-emphasis driver 401 and the input of the linear device 402, so that the linear device 402 receives at its input a pre-emphasized electrical digital signal that has been further processed by the one or more digital signal processing units interposed between pre-transition pre-emphasis driver 401 and linear device 402. It is important for the present invention that the digital signal is pre-emphasized by the pre-transition pre-emphasis driver 401 before it is processed by the linear device 402.

The pre-transition pre-emphasis driver 401 compensates/reduces the effects caused by bandwidth limitation in the digital signal output by the linear device 402. However, the quality of the digital signal output by the linear device 402 of the first embodiment of the present invention is better than the quality of the digital signal output by the linear device 102 of the optical receiver 100 shown in Figure 1, because the pre-transition pre-emphasis driver 401 of the first embodiment of the present invention does not enhance ringing in the outputted digital signal. This will be demonstrated later.

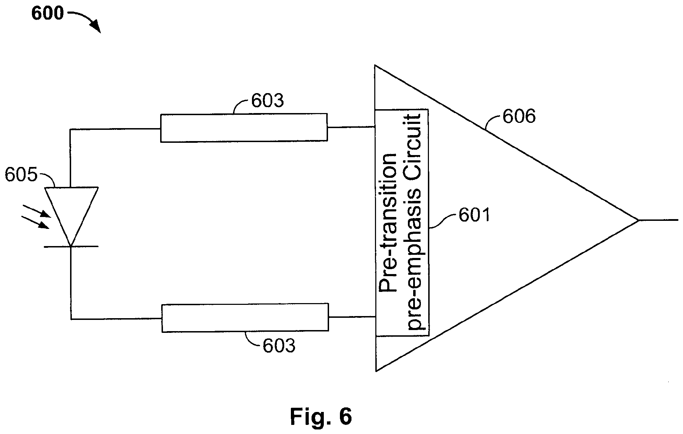

Referring now to Figure 6, an optical receiver in accordance with a second embodiment of the present invention is described. The optical receiver 600 in accordance with the second embodiment of the present invention comprises a photodiode 605, for instance, a positive intrinsic negative diode, and a transimpedance amplifier with a pre-transition pre-emphasis circuit 601. The pre-transition pre-emphasis circuit 601 and the transimpedance amplifier are integrated in one device 606, which is connected to the photodiode 605 by means of interconnects 603. The transimpedance amplifier of the optical receiver according to the second embodiment corresponds to the linear device 402 of the apparatus according to the first embodiment. The photodiode 605 receives an optical digital signal, converts the received optical digital signal into an electric digital signal, and outputs the electric digital signal to the interconnects 603. The transimpedance amplifier with the pre-transition pre-emphasis circuit receives the electric digital signal output by the photodiode 605 via the interconnects 603, and outputs an electric signal which is compensated for the bandwidth limitation and ringing by means of the pre-transition pre-emphasis circuit 601.

The effect/response of the pre-transition pre-emphasis circuit 601 on a received electric digital signal is the same as the effect/response of the pre-transition pre-emphasis driver 401 used in the first embodiment. Also, the description of the pre-transition pre-emphasis driver 401 of the first embodiment applies to the pre-transition pre-emphasis circuit 601 of the second embodiment. Therefore, a detailed description of the pre-transition pre-emphasis circuit 601 is omitted.

**Table 1**

| Parameter | Without pre-emphasis | Post-transition pre-emphasis | Pre-transition pre-emphasis |
|---|---|---|---|
| Eye height | 80 | 87 | 97 |
| Rise/Fall time [ps] | 24 | 19 | 14 |
| Deterministic jitter [ps] | 3.2 | 5.7 | 4.0 |
| Overshoot/Undershoot | 12 | 34 | 22 |

The effect of the pre-transition pre-emphasis circuit 601 on the electric digital signal output by the transimpedance amplifier becomes evident from Table 1. The table indicates parameters of (positive) pulses output by the transimpedance amplifier of an optical receiver that: i) does not apply pre-emphasis signal processing to the electric digital signal output by the PIN; ii) applies post-transition pre-emphasis signal processing, as shown in Figure 2, to the electric digital signal output by the PIN; and iii) applies pre-transition pre-emphasis signal processing, as shown in Figure 5a, to the electric digital signal output by the PIN. The pulses are output in response to rectangular pulses of an optical digital signal having a transmission rate of 25 Gbps. At the input of the positive intrinsic negative diode of the optical receiver, the rise time and fall time of a pulse of the optical digital signal is 21 ps. The parameters given in Table 1 are: eye height of the eye diagram of the electric digital signal output by the transimpedance amplifier, rise/fall time of the pulses of the electric digital signal output by the transimpedance amplifier, deterministic jitter derived from the eye diagram, and overshoot/undershoot of the pulses of the electric digital signal output by the transimpedance amplifier. Rise and fall time are determined by the 20%-level and 80%-level of the slope of the eye diagram.

Table 1 shows that pre-transition pre-emphasis signal processing leads to an opening of the eye diagram. This opening is greater than the opening caused by post-transition pre-emphasis signal processing. The deterministic jitter induced by pre-transition pre-emphasis signal processing is lower than the deterministic jitter induced by post-transition pre-emphasis signal processing, and only slightly increased compared to the deterministic jitter of a digital signal that has not been subjected to pre-emphasis signal processing.

As random jitter is proportional to rise/fall time, table 1 also indicates that random jitter of a digital signal that has been subjected to pre-transition pre-emphasis signal processing is lower than random jitter of a digital signal that has been subjected to post-transition pre-emphasis signal processing, and is much lower than random jitter of a digital signal that has not been subjected to pre-emphasis signal processing at all.

Hence, the present invention advantageously increases the opening of the eye diagram and decreases random jitter without increasing the deterministic jitter significantly.

Furthermore, table 1 shows that the overshoot/undershoot of a digital signal subjected to pre-transition pre-emphasis signal processing is lower than the overshoot/undershoot of a digital signal subjected to post-transition pre-emphasis signal processing, and is only a little higher than the overshoot/undershoot of a digital signal that has not been subjected to pre-emphasis signal processing at all.

This is evidence that the present invention compensates the disadvantageous effects caused by bandwidth limitation without enhancing ringing significantly.

In Figure 6, the pre-transition pre-emphasis circuit 601 and the transimpedance amplifier are integrated in one device 606. However, the present invention is not limited to this configuration, but also includes configurations, wherein the pre-emphasis circuit 601 and the transimpedance amplifier are separate from each other.

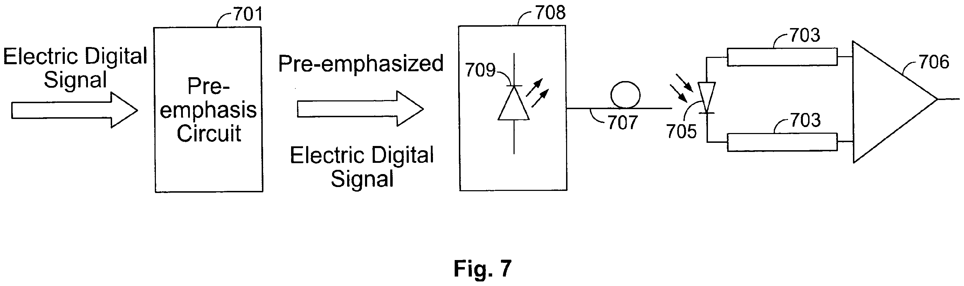

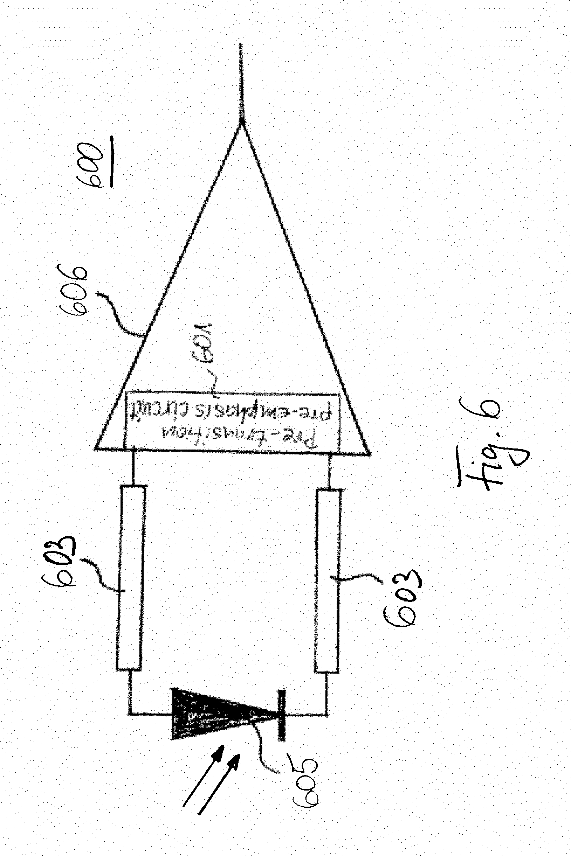

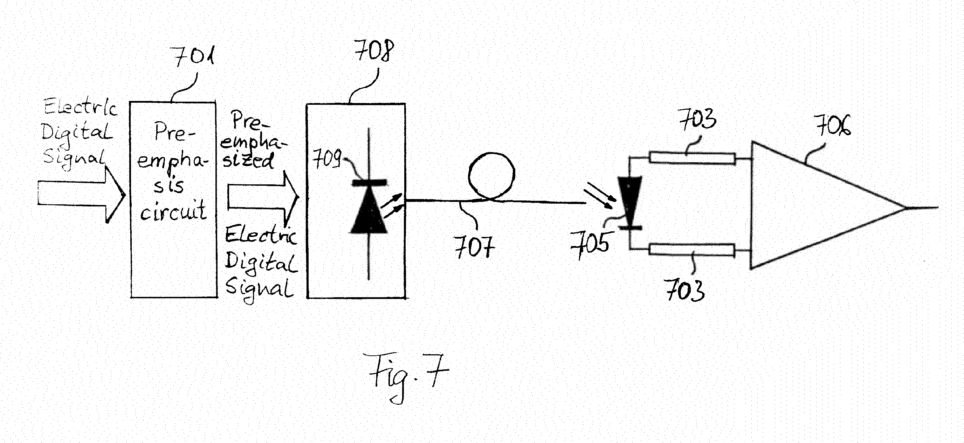

Referring now to Figure 7, a communication system in accordance with a third embodiment of the present invention is shown. The communication system according to the third embodiment of the present invention comprises a pre-transition pre-emphasis circuit 701, an optical transmitter 708, an optical receiver, and an optical fiber 707 interconnecting the optical transmitter 708 and the optical receiver.

The pre-transition pre-emphasis circuit 701 receives an electric digital signal, pre-emphasizes the received electric digital signal, and outputs the pre-emphasized electric digital signal to the optical transmitter 708. The effect/response of the pre-transition pre-emphasis circuit 701 on an electric digital signal is the same as the effect/response of the pre-transition pre-emphasis driver 401 used in the first embodiment. Also, the description relating to the pre-transition pre-emphasis driver 401 of the first embodiment applies to the pre-transition pre-emphasis circuit 701 of the third embodiment. Therefore, a detailed description of the pre-transition pre-emphasis circuit 701 is omitted.

The optical transmitter 708, which includes an amplifier and a laser device, for instance, a vertical-cavity surface-emitting laser 709, receives the pre-emphasized electric digital signal output by the pre-emphasis circuit 701, generates an optical digital signal corresponding to the received pre-emphasized electric digital signal by means of the vertical-cavity surface-emitting laser 709, and transmits the generated optical digital signal to the optical receiver via the optical fiber 707.

The optical receiver includes a photodiode 705, for instance, a positive intrinsic negative diode, and a transimpedance amplifier 706 connected to the photodiode 705 by means of interconnects 703. The photodiode 705 receives an optical digital signal from the optical fiber 707, converts the received optical digital signal into an electric digital signal, and outputs the electric digital signal to the interconnects 703. The transimpedance amplifier 706 receives the electric digital signal output by the photodiode 705 via interconnects 703.

As the optical transmitter 708 receives the pre-emphasized electric digital signal output by the pre-emphasis circuit 701, a pulse of the optical digital signal generated by the vertical-cavity surface-emitting laser 709 and transmitted to the optical receiver via the optical fiber 707, has the shape of the curve 502 shown in Figure 5a. Also, the electrical pulse input to the transimpedance amplifier 706 has the shape of the curve 502 given in Figure 5a, as the shape of the electrical pulse output by the photodiode 705 corresponds to the shape of the optical pulse received by the photodiode 705. Therefore, a pulse of the electric digital signal output by the transimpedance amplifier 706 shows the same advantageous parameters as the output pulse of the transimpedance amplifier 606 of the second embodiment.

In Figure 7, the pre-transition pre-emphasis circuit 701 and the optical transmitter 708 are separate from each other. However, the present invention is not limited to this configuration, but also includes optical transmitters, wherein the pre-transition pre-emphasis circuit 701 is included in the optical transmitter 708. Advantageously, the pre-transition pre-emphasis circuit 701 and the amplifier of the optical transmitter 708 are integrated in one device.

In the communication system of Figure 7, the pre-transition pre-emphasis circuit 701 for pre-emphasizing a digital signal to be communicated from the optical transmitter 708 to the optical receiver is located at the transmitter's side. However, the present invention is not limited to this embodiment, but also relates to a communication system, wherein the digital signal communicated between optical transmitter and optical receiver is pre-emphasized by a pre-transition pre-emphasis circuit located at the optical receiver's side, for instance, by the optical receiver 600 according to the second embodiment.

Also, the present invention relates to a communication system comprising: the optical receiver 600 according to the second embodiment, which includes a first pre-transition pre-emphasis circuit, and a second pre-transition pre-emphasis circuit 701 located at the optical transmitter's side. Preferably, the second pre-transition pre-emphasis circuit and the amplifier of the optical transmitter are integrated in one device. In this communication system, the digital signal communicated between optical transmitter and optical receiver is pre-emphasized according to the present invention on the transmitter's and on the receiver's side.

The present invention compensates/reduces the negative effects caused by bandwidth limitation without enhancing ringing. Also, the present invention increases the opening of the eye diagram and decreases random jitter without increasing the deterministic jitter significantly. Therefore, the present invention is especially suited in communication systems having high data transmission rates, such as 25 Gbps.

### Reference Numerals

| **Reference Numeral** | **Description** |
|---|---|
| 100 | Conventional optical receiver |
| 101 | Photodiode, e.g. positive intrinsic negative diode (PIN) |
| 102 | Transimpedance amplifier (TIA) |
| 103 | PIN-TIA interconnects |
| 201 | Shape of an rectangular pulse subjected to post-transition pre-emphasis signal processing |
| 202 | Overshoot of an rectangular pulse subjected to post-transition pre-emphasis signal processing |
| 203 | Undershoot of an rectangular pulse subjected to post-transition pre-emphasis signal processing |
| 301 | Response of a conventional transimpedance amplifier on a rectangular pulse signal applied at its inputs |
| 302 | Ringing |
| 400 | Apparatus for processing a digital signal according to the invention |
| 401, 601, 701 | Pre-transition pre-emphasis driver/circuit for an electrical digital signal |
| 402 | Linear device |
| 501, 511 | Digital pulse input to the pre-transition pre-emphasis driver/circuit |
| 502, 512 | Digital pulse output by the pre-transition pre-emphasis driver/circuit |
| 503, 514 | Undershoot of a level of the digital pulse output by the pre-transition pre-emphasis driver/circuit |
| 504, 513 | Overshoot of a level of the digital pulse output by the pre-transition pre-emphasis driver/circuit |
| 600 | Optical receiver according to the invention |
| 603, 703 | PIN-TIA interconnects |
| 605, 705 | Photodiode |
| 606, 706 | Transimpedance amplifier |
| 700 | Communication system according to the invention |
| 707 | Optical link |
| 708 | Optical transmitter |
| 709 | Vertical-cavity surface-emitting laser |

## Claims

1. A method for processing a digital signal through a linear device having a resonance frequency or a linear device that is described by a Laplace-filter having more than one pole, the digital signal making a first transition from a first level to a second level, wherein the first level is lower than the second level, the method comprising:
pre-emphasizing the digital signal before processing it by the linear device;
**characterized in that** pre-emphasizing the digital signal includes:
pre-emphasizing the digital signal by applying an undershoot to the first level before the first transition.

2. The method according to claim 1, wherein the digital signal further makes a second transition, following the first transition, from the second level to a third level, the second level is higher than the third level, and
the pre-emphasizing the digital signal further includes:
pre-emphasizing the digital signal by applying an overshoot to the second level before the second transition,
preferably, the third level is equal to the first level.

3. The method according to claim 2, wherein the undershoot applied to the first level is immediately before the first transition, or
the overshoot applied to the second level is immediately before the second transition.

4. A method for processing a digital signal through a linear device having a resonance frequency or a linear device that is described by a Laplace-filter having more than one pole, the digital signal making a first transition from a first level to a second level, wherein the first level is higher than the second level, the method comprising:
pre-emphasizing the digital signal before processing it by the linear device;
**characterized in that** pre-emphasizing the digital signal includes:
pre-emphasizing the digital signal by applying an overshoot to the first level before the first transition.

5. The method according to claim 4, wherein the digital signal further makes a second transition, following the first transition, from the second level to a third level, the second level is lower than the third level, and
the pre-emphasizing the digital signal further includes:
pre-emphasizing the digital signal by applying an undershoot to the second level before the second transition,
preferably, the third level is equal to the first level.

6. The method according to claim 5, wherein the overshoot applied to the first level is immediately before the first transition, or
the undershoot applied to the second level is immediately before the second transition.

7. Apparatus for processing a digital signal, the digital signal making a first transition from a first level to a second level, wherein the first level is lower than the second level, the apparatus comprising:
a linear device (402) having a resonance frequency or that is described by a Laplace-filter having more than one pole, for processing the digital signal; and
a pre-emphasis circuit (401) adapted to pre-emphasize the digital signal before processing it by the linear device (402), preferably the pre-emphasis circuit is a driver;
**characterized in that**
the pre-emphasis circuit (401) is adapted to pre-emphasize the digital signal by applying an undershoot to the first level before the first transition.

8. The apparatus according to claim 7, wherein the digital signal further makes a second transition, following the first transition, from the second level to a third level, the second level is higher than the third level, and
the pre-emphasis circuit (401) is further adapted to pre-emphasize the digital signal by applying an overshoot to the second level before the second transition.

9. The apparatus according to claim 8, wherein the undershoot applied to the first level is immediately before the first transition, or
the overshoot applied to the second level is immediately before the second transition.

10. Apparatus for processing a digital signal, the digital signal making a first transition from a first level to a second level, wherein the first level is higher than the second level, the apparatus comprising:
a linear device (402) having a resonance frequency or that is described by a Laplace-filter having more than one pole, for processing the digital signal; and
a pre-emphasis circuit (401) adapted to pre-emphasize the digital signal before processing it by the linear device (402), preferably the pre-emphasis circuit is a driver;
**characterized in that**
the pre-emphasis circuit (401) is adapted to pre-emphasize the digital signal by applying an overshoot to the first level before the first transition.

11. The apparatus according to claim 10, wherein the digital signal further makes a second transition, following the first transition, from the second level to a third level, the second level is lower than the third level, and
the pre-emphasis circuit (401) is further adapted to pre-emphasize the digital signal by applying an undershoot to the second level before the second transition.

12. The apparatus according to claim 11, wherein the overshoot applied to the first level is immediately before the first transition, or
the undershoot applied to the second level is immediately before the second transition.

13. Optical receiver comprising:
a photodiode (605) for converting an optical digital signal into an electric digital signal; and
a first apparatus according to any of claims 7 to 12,
wherein the pre-emphasis circuit (601) of the first apparatus is adapted to pre-emphasize the electric digital signal output by the photodiode (605), and
the linear device of the first apparatus is a transimpedance amplifier (606) adapted to receive the digital signal pre-emphasized by the pre-emphasis circuit (601),
preferably the pre-emphasis circuit (601) and the transimpedance amplifier of the first apparatus are integrated in one device (606).

14. Communication system comprising:
an optical transmitter (708);
a photodiode (705);
an optical link (707) interconnecting the optical transmitter (708) and the photodiode (705); and
the apparatus according to any of claims 7 to 12,
wherein the pre-emphasis driver (701) of the apparatus is adapted to receive an electric digital signal, to generate a pre-emphasized electric digital signal based on the received electric digital signal, and to output the pre-emphasized electric digital signal,
the optical transmitter (708) is adapted to receive the pre-emphasized electric digital signal, to generate an optical digital signal based on the received pre-emphasized electric digital signal, and to transmit the optical digital signal to the photodiode (705) via the optical link (707),
the photodiode (705) is adapted to receive the optical digital signal via the optical link (707), to convert the received optical digital signal into a converted electrical digital signal, and to output the converted electrical digital signal, and
the linear device of the apparatus is an amplifier (706), particularly a transimpedance amplifier, adapted to receive the converted electrical digital signal from the photodiode (705).

15. Communication system according to claim 14, wherein the optical transmitter (708) includes an amplifier and a laser device (709), and
the pre-emphasis driver (701) of the apparatus and the amplifier of the optical transmitter (708) are integrated in one device.

## Patentansprüche

1. Verfahren zur Verarbeitung eines digitalen Signals durch eine lineare Vorrichtung mit einer Resonanzfrequenz oder eine lineare Vorrichtung, die durch einen Laplace-Filter mit mehr als einer Polstelle beschrieben wird, wobei das digitale Signal einen ersten Übergang von einem ersten Pegel zu einem zweiten Pegel macht, der erste Pegel niedriger als der zweite Pegel ist, und das Verfahren umfasst:
Akzentuieren (pre-emphasizing) des digitalen Datensignals vor seiner Verarbeitung durch die lineare Vorrichtung;
**dadurch gekennzeichnet, dass**
das Akzentuieren des digitalen Signals einschließt:
Akzentuieren des digitalen Signals durch Anwenden eines Unterschwingens (undershoot) auf den ersten Pegel vor dem ersten Übergang.

2. Verfahren nach Anspruch 1, wobei das digitale Signal des Weiteren einen zweiten Übergang, dem ersten Übergang folgend, von dem zweiten Pegel zu einem dritten Pegel macht, wobei der zweite Pegel höher als der dritte Pegel ist, und
das Akzentuieren des digitalen Signals des Weiteren einschließt:
Akzentuieren des digitalen Signals durch Anwenden eines Überschwingens (overshoot) auf den zweiten Pegel vor dem zweiten Übergang,
wobei der dritte Pegel bevorzugt gleich dem ersten Pegel ist.

3. Verfahren nach Anspruch 2, wobei das auf den ersten Pegel angewandte Unterschwingen unmittelbar vor dem ersten Übergang liegt, oder
das auf den zweiten Pegel angewandte Überschwingen unmittelbar vor dem zweiten Übergang liegt.

4. Verfahren zur Verarbeitung eines digitalen Signals durch eine lineare Vorrichtung mit einer Resonanzfrequenz oder eine lineare Vorrichtung, die durch einen Laplace-Filter mit mehr als einer Polstelle beschrieben wird, wobei das digitale Signal einen ersten Übergang von einem ersten Pegel zu einem zweiten Pegel macht, wobei der erste Pegel höher als der zweite Pegel ist, und das Verfahren umfasst:
Akzentuieren des digitalen Signals vor seiner Verarbeitung durch die lineare Vorrichtung;
**dadurch gekennzeichnet, dass**
das Akzentuieren des digitalen Signals einschließt:
Akzentuieren des digitalen Signals durch Anwenden eines Überschwingens auf den ersten Pegel vor dem ersten Übergang.

5. Verfahren nach Anspruch 4, wobei das digitale Signal des Weiteren einen zweiten Übergang, dem ersten Übergang folgend, von dem zweiten Pegel zu einem dritten Pegel macht, wobei der zweite Pegel niedriger als der dritte Pegel ist, und
wobei das Akzentuieren des digitalen Signals des Weiteren einschließt:
Akzentuieren des digitalen Signals durch Anwenden eines Unterschwingens auf den zweiten Pegel vor dem zweiten Übergang,
wobei der dritte Pegel bevorzugt gleich dem ersten Pegel ist.

6. Verfahren nach Anspruch 5, wobei das auf den ersten Pegel angewandte Überschwingen unmittelbar vor dem ersten Übergang liegt, oder
das auf den zweiten Pegel angewandte Unterschwingen unmittelbar vor dem zweiten Übergang liegt.

7. Vorrichtung zur Verarbeitung eines digitalen Signals, wobei das digitale Signal einen ersten Übergang von einem ersten Pegel zu einem zweiten Pegel macht, wobei der erste Pegel niedriger als der zweite Pegel ist, und die Vorrichtung umfasst:
eine lineare Vorrichtung (402), die eine Resonanzfrequenz aufweist, oder durch einen Laplace-Filter mit mehr als einer Polstelle beschrieben wird, zur Verarbeitung des digitalen Signals; und
eine Pre-Emphasis-Schaltung (401), daran angepasst, das digitale Signal vor seiner Verarbeitung durch die lineare Vorrichtung (402) zu akzentuieren, wobei die Pre-Emphasis-Schaltung bevorzugt ein Treiber ist;
**dadurch gekennzeichnet, dass**
die Pre-Emphasis-Schaltung (401) daran angepasst ist, das digitale Signal durch Anwenden eines Unterschwingens auf den ersten Pegel vor dem ersten Übergang zu akzentuieren.

8. Vorrichtung nach Anspruch 7, wobei das digitale Signal des Weiteren einen zweiten Übergang, dem ersten Übergang folgend, von dem zweiten Pegel zu einem dritten Pegel macht, wobei der zweite Pegel höher als der dritte Pegel ist, und
die Pre-Emphasis-Schaltung (401) des Weiteren daran angepasst ist, das digitale Signal durch Anwenden eines Überschwingens auf den zweiten Pegel vor dem zweiten Übergang zu akzentuieren.

9. Vorrichtung nach Anspruch 8, wobei das auf den ersten Pegel angewandte Unterschwingen unmittelbar vor dem ersten Übergang liegt, oder
das auf den zweiten Pegel angewandte Überschwingen unmittelbar vor dem zweiten Übergang liegt.

10. Vorrichtung zur Verarbeitung eines digitalen Signals, wobei das digitale Signal einen ersten Übergang von einem ersten Pegel zu einem zweiten Pegel macht, wobei der erste Pegel höher als der zweite Pegel ist, und die Vorrichtung umfasst:
eine lineare Vorrichtung (402), die eine Resonanzfrequenz aufweist, oder die durch einen Laplace-Filter mit mehr als einer Polstelle beschrieben wird, zur Verarbeitung des digitalen Signals; und
eine Pre-Emphasis-Schaltung (401), daran angepasst, das digitale Signal vor seiner Verarbeitung durch die lineare Vorrichtung (402) zu akzentuieren, wobei die Pre-Emphasis-Schaltung bevorzugt ein Treiber ist;
**dadurch gekennzeichnet, dass**
die Pre-Emphasis-Schaltung (401) daran angepasst ist, das digitale Signal durch Anwenden eines Überschwingens auf den ersten Pegel vor dem ersten Übergang zu akzentuieren.

11. Vorrichtung nach Anspruch 10, wobei das digitale Signal des Weiteren einen zweiten Übergang, dem ersten Übergang folgend, von dem zweiten Pegel zu einem dritten Pegel macht, wobei der zweite Pegel niedriger als der dritte Pegel ist, und
die Pre-Emphasis-Schaltung (401) des Weiteren daran angepasst ist, das digitale Signal durch Anwenden eines Unterschwingens auf den zweiten Pegel vor dem zweiten Übergang zu akzentuieren.

12. Vorrichtung nach Anspruch 11, wobei das auf den ersten Pegel angewandte Überschwingen unmittelbar vor dem ersten Übergang liegt, oder
das auf den zweiten Pegel angewandte Unterschwingen unmittelbar vor dem zweiten Übergang liegt.

13. Optischer Empfänger, umfassend:
eine Fotodiode (605) zur Umwandlung eines optischen digitalen Signals in ein elektrisches digitales Signal; und
eine erste Vorrichtung nach einem der Ansprüche 7 bis 12,
wobei die Pre-Emphasis-Schaltung (601) der ersten Vorrichtung daran angepasst ist, das elektrische digitale Signal, das von der Fotodiode (605) ausgegeben wird, zu akzentuieren, und
die lineare Vorrichtung der ersten Vorrichtung ein Transimpedanzverstärker (606) ist, daran angepasst, das durch die Pre-Emphasis-Schaltung (601) akzentuierte digitale Signal zu empfangen,
wobei die Pre-Emphasis-Schaltung (601) und der Transimpedanzverstärker der ersten Vorrichtung in einer Vorrichtung (606) integriert sind.

14. Kommunikationssystem, umfassend:
einen optischen Sender (708);
eine Fotodiode (705);
eine optische Verbindung (707), die den optischen Sender (708) und die Fotodiode (705) miteinander koppelt; und
die Vorrichtung nach einem der Ansprüche 7 bis 12,
wobei der Pre-Emphasis-Treiber (701) der Vorrichtung daran angepasst ist, ein elektrisches digitales Signal zu empfangen, ein akzentuiertes elektrisches digitales Signal basierend auf dem empfangenen elektrischen digitalen Signal zu erzeugen, und das akzentuierte elektrische digitale Signal auszugeben,
der optische Sender (708) daran angepasst ist, das akzentuierte elektrische digitale Signal zu empfangen, ein optisches digitales Signal basierend auf dem empfangenen akzentuierten elektrischen digitalen Signal zu erzeugen, und das optische digitale Signal über die optische Verbindung (707) zu der Fotodiode (705) zu senden,
die Fotodiode (705) daran angepasst ist, das optische digitale Signal über die optische Verbindung (707) zu empfangen, das empfangene optische digitale Signal in ein umgewandeltes elektrisches digitales Signal umzuwandeln, und das umgewandelte elektrische digitale Signal auszugeben, und
die lineare Vorrichtung der Vorrichtung ein Verstärker (706), insbesondere ein Transimpedanzverstärker, ist, daran angepasst, das umgewandelte elektrische Signal von der Fotodiode (705) zu empfangen.

15. Kommunikationssystem nach Anspruch 14, wobei der optische Sender (708) einen Verstärker und eine Laservorrichtung (709) einschließt, und
der Pre-Emphasis-Treiber (701) der Vorrichtung und der Verstärker des optischen Senders (708) in einer Vorrichtung integriert sind.

## Revendications

1. Procédé de traitement d'un signal numérique à travers un dispositif linéaire ayant une fréquence de résonance ou un dispositif linéaire qui est défini par un filtre Laplace présentant plus d'un pôle, le signal numérique effectuant une première transition d'un premier niveau à un second niveau, le premier niveau étant plus bas que le second niveau, le procédé comportant :
une préaccentuation du signal numérique avant le traitement par le dispositif linéaire ;
**caractérisé en ce que** la préaccentuation du signal numérique comprend :
une préaccentuation du signal numérique en appliquant un sous-dépassement au premier niveau avant la première transition.

2. Procédé selon la revendication 1, lors duquel le signal numérique effectue en outre, après la première transition, une seconde transition du second niveau à un troisième niveau, le second niveau étant plus élevé que le troisième niveau, et
la préaccentuation du signal numérique comprend en outre :
une préaccentuation du signal numérique en appliquant un dépassement au second niveau avant la seconde transition,
le troisième niveau est préférablement égal au premier niveau.

3. Procédé selon la revendication 2, lors duquel le sous-dépassement appliqué au premier niveau précède directement la première transition, ou bien
le dépassement appliqué au second niveau précède directement la seconde transition.

4. Procédé de traitement d'un signal numérique à travers un dispositif linéaire ayant une fréquence de résonance ou un dispositif linéaire qui est défini par un filtre Laplace présentant plus d'un pôle, le signal numérique effectuant une première transition d'un premier niveau à un second niveau, le premier niveau étant plus élevé que le second niveau, le procédé comportant :
une préaccentuation du signal numérique avant le traitement par le dispositif linéaire ;
**caractérisé en ce que** la préaccentuation du signal numérique comprend :
une préaccentuation du signal numérique en appliquant un dépassement au premier niveau avant la première transition.

5. Procédé selon la revendication 4, lors duquel le signal numérique effectue en outre, après la première transition, une seconde transition du second niveau à un troisième niveau, le second niveau étant plus bas que le troisième niveau, et
la préaccentuation du signal numérique comprend en outre :
une préaccentuation du signal numérique en appliquant un sous-dépassement au second niveau avant la seconde transition,
le troisième niveau est préférablement égal au premier niveau.

6. Procédé selon la revendication 5, lors duquel le dépassement appliqué au premier niveau précède directement la première transition, ou bien
le sous-dépassement appliqué au second niveau précède directement la seconde transition.

7. Appareil de traitement d'un signal numérique, le signal numérique effectuant une première transition d'un premier niveau à un second niveau, le premier niveau étant plus bas que le second niveau, l'appareil comportant :
un dispositif linéaire (402) ayant une fréquence de résonance ou étant défini par un filtre Laplace présentant plus d'un pôle pour traiter le signal numérique ; et
un circuit de préaccentuation (401) adapté pour pré-accentuer le signal numérique avant de le traiter avec le dispositif linéaire (402), le circuit de préaccentuation étant de préférence un driver ;
**caractérisé en ce que**
le circuit de préaccentuation (401) est adapté pour pré-accentuer le signal numérique en appliquant un sous-dépassement au premier niveau avant la première transition.

8. Appareil selon la revendication 7, dans lequel le signal numérique effectue en outre, après la première transition, une seconde transition du second niveau à un troisième niveau, le second niveau étant plus élevé que le troisième niveau, et
le circuit de préaccentuation (401) est en outre adapté pour pré-accentuer le signal numérique en appliquant un dépassement au second niveau avant la seconde transition.

9. Appareil selon la revendication 8, dans lequel le sous-dépassement appliqué au premier niveau précède directement la première transition, ou bien
le dépassement appliqué au second niveau précède directement la seconde transition.

10. Appareil de traitement d'un signal numérique, le signal numérique effectuant une première transition d'un premier niveau à un second niveau, le premier niveau étant plus élevé que le second niveau, l'appareil comportant :
un dispositif linéaire (402) ayant une fréquence de résonance ou étant défini par un filtre Laplace présentant plus d'un pôle pour traiter le signal numérique ; et
un circuit de préaccentuation (401) adapté pour pré-accentuer le signal numérique avant de le traiter avec le dispositif linéaire (402), le circuit de préaccentuation étant de préférence un driver ;
**caractérisé en ce que**
le circuit de préaccentuation (401) est adapté pour pré-accentuer le signal numérique en appliquant un dépassement au premier niveau avant la première transition.

11. Appareil selon la revendication 10, dans lequel le signal numérique effectue en outre, après la première transition, une seconde transition du second niveau à un troisième niveau, le second niveau étant plus bas que le troisième niveau, et
le circuit de préaccentuation (401) est en outre adapté pour pré-accentuer le signal numérique en appliquant un sous-dépassement au second niveau avant la seconde transition.

12. Appareil selon la revendication 11, dans lequel le dépassement appliqué au premier niveau précède directement la première transition, ou bien
le sous-dépassement appliqué au second niveau précède directement la seconde transition.

13. Récepteur optique comportant :
une photodiode (605) pour convertir un signal numérique optique en un signal numérique électrique ; et
un premier appareil selon l'une quelconque des revendications 7 à 12,
dans lequel le circuit de préaccentuation (601) du premier appareil est adapté pour pré-accentuer le signal numérique électrique émis en sortie par la photodiode (605), et
le dispositif linéaire du premier appareil est un amplificateur à transimpédance (606) adapté pour recevoir le signal numérique pré-accentué par le circuit de préaccentuation (601),
le circuit de préaccentuation (601) et l'amplificateur à transimpédance du premier appareil sont intégrés dans un seul dispositif (606).

14. Système de communication comportant :
un transmetteur optique (708) ;
une photodiode (705) ;
une liaison optique (707) connectant le transmetteur optique (708) et la photodiode (705) l'un avec l'autre ; et
l'appareil selon l'une quelconque des revendications 7 à 12,
où le driver de préaccentuation (701) de l'appareil est adapté pour recevoir un signal numérique électrique, pour générer un signal numérique électrique pré-accentué à partir du signal numérique électrique reçu, et pour émettre en sortie le signal numérique électrique pré-accentué,
le transmetteur optique (708) est adapté pour recevoir le signal numérique électrique pré-accentué, pour générer un signal numérique optique à partir du signal numérique électrique pré-accentué reçu, et pour transmettre le signal numérique optique à la photodiode (705) via la liaison optique (707),
la photodiode (705) est adaptée pour recevoir le signal numérique optique via la liaison optique (707), pour convertir le signal numérique optique reçu en un signal numérique électrique converti, et pour émettre en sortie le signal numérique électrique converti, et
le dispositif linéaire de l'appareil est un amplificateur (706), en particulier un amplificateur à transimpédance, adapté pour recevoir le signal numérique électrique converti en provenance de la photodiode (705).

15. Système de communication selon la revendication 14, dans lequel le transmetteur optique (708) comprend un amplificateur et un dispositif laser (709), et
le driver de préaccentuation (701) de l'appareil et l'amplificateur du transmetteur optique (708) sont intégrés dans un seul dispositif.
